Europäisches Patentamt

European Patent Office

Office européen des brevets

(11) Veröffentlichungsnummer: **0 456 042 B1**

# EUROPÄISCHE PATENTSCHRIFT

(45) Veröffentlichungstag der Patentschrift: **31.08.94**

(51) Int. Cl.⁵: **B01D 53/34**

(21) Anmeldenummer: **91106670.2**

(22) Anmeldetag: **25.04.91**

(54) **Verfahren zur Bestimmung der Reaktivität einer im Wäscher zirkulierenden, teilweise gebrauchten Kalksteinsuspension.**

(30) Priorität: **08.05.90 AT 1031/90**

(43) Veröffentlichungstag der Anmeldung:
**13.11.91 Patentblatt 91/46**

(45) Bekanntmachung des Hinweises auf die Patenterteilung:
**31.08.94 Patentblatt 94/35**

(84) Benannte Vertragsstaaten:
**DE GB**

(56) Entgegenhaltungen:
**DE-A- 3 429 951**
**DE-A- 3 514 674**
**DE-A- 3 809 379**

(73) Patentinhaber: **WAAGNER-BIRO AKTIENGE-SELLSCHAFT**
**Stadlauer Strasse 54**
**Postfach 11**
**A-1221 Wien (AT)**

(72) Erfinder: **Glasner, Alfred, Dipl.-Ing.**
**A-8162 Passail 237 (AT)**

(74) Vertreter: **Wallner, Gerhard, Dipl.-Ing.**
**c/o Waagner-Biro Aktiengesellschaft**
**Patentabteilung**
**Stadlauer-Strasse 54**
**Postfach 11**
**A-1221 Wien (AT)**

**Beschreibung**

Die Erfindung betrifft ein Verfahren zur Bestimmung der Reaktität einer in einer nassen Rauchgasentschwefelungsanlage im Wäscher zirkulierenden, teilweise gebrauchten Kalksteinsuspension zur Regelung der Zugabe von frischem Kalksteinmehl zur Gewährleistung der $SO_2$-Absorptionsfähigkeit der Rauchgasentschwefelungsanlage bei Lastschwankungen, wobei der zirkulierenden Kalksteinsuspension jeweils eine konstante Teilmenge entnommen wird, der Säure zur Lösung des suspendierten Kalksteinsteins zugemischt wird.

Es ist bekannt, bei nassen Rauchgasentschwefelungsanlagen die Reaktivität der Suspension, die die Absorption des Schwefeldioxids im Absorber durchführt, durch die Messung des pH-Wertes im Absorber zu beurteilen, und auf Grund dieser pH-Wert-Messung und der Messung der Schwefeldioxidwerte vor und nach dem Absorber und der Verknüpfung dieser Messwerte in einem Prozeßrechner die Kalksteinmehlzugabe für den in Kalksulfat umgewandelten Kalkstein zu steuern. Da die $SO_2$-Schwankungen im Abgas innerhalb einer Bandbreite nicht vorhersehbar sind und die Messungen des pH-Wertes bzw. Änderungen des pH-Wertes bei Suspensionen sehr träge sind, kommt die Regelung bei rascher Belastungsänderung den Anforderungen nicht nach bzw. wird sehr aufwendig und auch störungsanfällig. Die Folge ist, daß die Emissionswerte starken Schwankungen unterworfen sind, so daß sie den gesetzlichen Bestimmungen des Umweltschutzgetzes nicht mehr entsprechen. Um diesen Problemen zu entgehen, kann man natürlich die Suspension mit größerem Kalksteingehalt betreiben. Dadurch ergibt sich ein vermehrter Anfall an einem nicht mehr verwertbaren Gemisch von Kalziumsulfit und Kalziumkarbonat, was sich in erhöhten Deponiekosten ausdrückt, obwohl hochwertiges Kalziumsulfit durchaus weiter verwendungsfähig wäre.

Es ist daher Aufgabe der Erfindung, die Ist-Situation zu verbessern, so daß das Kalziumsulfit in höherer Konzentration anfällt und dadurch weniger vom Kalziumkarbonat verunreinigt wird, wobei die angenehme Nebenwirkung auftritt, daß auch weniger Kalziumkarbonat verwendet werden muß, um die gleichen $SO_2$-Emissionswerte zu gewährleisten. Um diesem Problemkreis zu begegnen, wurde gemäß der AT-B-387.287 ein Verfahren bekannt, bei dem die Regelung der Kalksteinzugabe vom Karbonatgehalt der Wäschersuspension abhängig gemacht wird. Diese Maßnahme brachte eine sehr feinfühlige Steuerung, hatte jedoch den Nachteil, daß der Karbonatgehalt allein für die Reaktivität der Wäschersuspension zu wenig aussagt. Unvermeidliche Ionenbeimischungen, einerseits durch das Kalksteinmehl und andererseits durch die mitgeführte Flugasche des zu reinigenden Abgases hervorgerufen, beeinflussen die Lösung des Karbonats, wobei besonders Magnesium, $Al_2O_3$, Phosphat und auch Eisen bzw. Ammoniak stark vermindernde Einflüsse mit sich bringen, so daß die möglichen Einsparungen an Kalksteinsuspension nicht voll ausgeschöpft werden. Das Lösungsverhalten des Kalksteins in Wasser durch Säurezugabe, insbesondere Essigsäurezugabe, läßt sich beschleunigen. Diese Beschleunigung erfolgt praktisch linear zur Wasserauflösung, daher läßt sich die Reaktivität der Wäschersuspension langfristig vorhersagen, so daß Störeinflüsse durch Karbonatmangel vom Wäscher ferngehalten werden und dieser mit optimalem Wirkungsgrad betrieben werden kann.

Die Korngröße besitzt naturgemäß ebenfalls einen Einfluß auf die Auflösegeschwindigkeit. Für einen sicheren Entschwefelungsprozeß ist daher eine Mindestauflösegeschwindigkeit des Kalksteinmehls einzuhalten. Für den Fall einer bestimmten $SO_2$-Fracht ist bei gleichem pH-Wert im Wäscher daher bei hoher Reaktivität ein niedriger Restcarbonatgehalt notwendig, bei niedriger Reaktivität ein entsprechend höherer Carbonatüberschuß erforderlich.

Die Erfindung ist dadurch gekennzeichnet, daß die Auflösegeschwindigkeit des Kalksteinmehls in der Säurelösung bei pH 3,5 gemessen und zur Bestimmung der notwendigen Kalksteingabe zur Wäschersuspension verwenden wird. Vorzugsweise wird als Säure Essigsäure verwendet. Insbesondere wird das Volumen des bei der Lösung entstehenden Gases bei konstanter Zeit gemessen.

Die Ansprüche 4 bis 6 stellen vorteilhafte Weiterbildungen der Erfindung durch an sich bekannte Merkmale dar, die in ihrer Gesamtheit mit dem Hauptanspruch eine bedeutende Verbesserung des Ist-Zustandes bewirken.

In den Zeichnungen ist in zwei Schaltbildern eine erfindungsgemäße Ausgestaltung der Regelung und in einem Diagramm der gesetzliche Zusammenhang dargestellt. Fig. 1 zeigt die Probennahme, Fig. 2 die Durchführung der Analyse in der erfindungsgemäßen Anlage und Fig. 3 das Druck/Zeit-Diagramm.

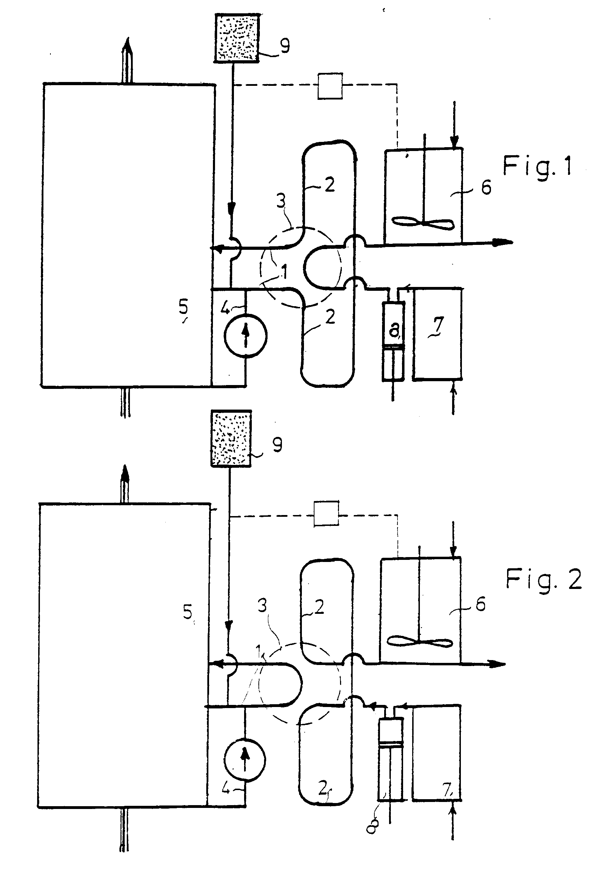

In Fig.1 ist das Schaltbild der Regelung einer nassen Rauchgasentschwefelungsanlage dargestellt. Bei dieser Rauchgasentschwefelungsanlage wird eine wässrige Kalksteinmehlsuspension mit dem Rauchgas in Kontakt gebracht, wobei die Karbonate durch den $SO_2$-Gehalt des Abgases oder Sulfate sukzessive in Kalziumsulfite bzw. Kalziumsulfate umgewandelt werden. Um den Karbonatgehalt der Waschflüssigkeitssuspension zu überwachen, wird aus der Zuführungsleitung 4 für die Sorptionssuspension zum $SO_2$-Absorber 5 eine Zweigleitung 1,2 abgezweigt, die einer geringen Durchströmungsquerschnitt von etwa 3 bis 5 mm Durchmesser aufweist, und die ständig von der Kalksteinsuspension durchströmt wird, so daß sich die Suspension nicht entmischen kann. Zwischen den Teilen 1 und 2 der Zweigleitung ist ein Mehrwegeventil 3 angeordnet, mit welchem ein Teil der Zweigleitung 2 (s. Fig. 2) von der Zirkulation mit dem Absorber 5 abgetrennt werden kann und gleichzeitig dieses Leitungsstück in einem Meßzyklus eingebunden wird, wobei der Leitungsinhalt als Meßmenge dient und durch Säure aus einem Säurevorratsbehälter 7 und über eine Dosierpumpe 8 aus der Meßleitung in einen Reaktionsbehälter 6 geführt wird, in dem der Karbonatgehalt der Suspension durch die Säure, die zweckmäßigerweise Essigsäure ist, in Sulfit oder Sulfat umgewandelt wird, wobei $CO_2$ als einziger gasförmiger Bestandteil freigesetzt wird, dessen entstehende Menge in der Zeiteinheit in direktem Zusammenhang mit der Lösungsgeschwindigkeit des Karbonats in der Waschflüssigkeit steht, so daß man auch aus diesem Wert die Reaktivität des Karbonats ablesen bzw. abnehmen kann. Dieser Meßwert wird einem Regler zugeführt, der die Kalksteinmengenzuführung aus dem Vorratsbehälter 9 in die Zuführungsleitung 4 nach der Abzweigung der Zweigleitung 1 einspeist, so daß in einer vorgebenen Suspensionsmenge immer ein bestimmter Karbonatgehalt unabhängig von der Sulfitfracht freigegeben ist. Diese Steuerung ist sehr feinfühlig und kann in sehr kurzen Abständen, eventuell auch in mehreren parallel geschalteten zeitlich jedoch versetzten Kreisläufen angewendet werden.

Die Durchspülung der Meßleitung mit Säure hat auch den Erfolg, daß die Meßleitung ständig sauber gehalten wird und Kalksteinanbackungen dadurch chemisch gelöst werden. Die Verwendung von Schwefelsäure verhindert die Freisetzung von $SO_2$, so daß kein zusätzliches Gas im Reaktionsbehälter erzeugt wird, wodurch der Meßwert verfälscht werden könnte. Mit anderen Worten, gemäß einem erfindungsgemäßen Verfahren wird der jeweilige Kalksteinüberschuß in einem zeitverkürzten Test bestimmt, wobei die langsame Lösung des Kalksteins in der durch Essigsäure angesäuerten Waschflüssigkeit bei pH-Wert 3,5 bedeutend beschleunigt wird, so daß sich eine Vorausschau der Änderung des Karbonatgehaltes im Wäscher auf etwa 2 1/2 Stunden ergibt, wodurch eine relativ einfache Regelung der Kalksteinzugabe möglich wird, ohne daß die Schwefeldioxidmengen vor und nach dem Wäscher für die direkte Regelung benötigt werden. Die Messung der Reaktivität ist mit dem Meßverfahren durch Säuredosierung und Messung des Druckanstieges als Funktion der Zeit einfach durchzuführen, wenn als Säure ein entsprechendes Puffersystem verwendet wird, wodurch sich der pH-Wert in der Meßzelle während der Messung nur in geringem Ausmaß ändert. Vorteilhaft setzt man z.B. Essigsäure ein, welche auch in der Handhabung und Korrosivität günstig ist. Hier liegt der pH-Wert bei etwa 3,5.

Durch diese Maßnahme läßt sich mit größter Sicherheit die Wirkung des Naßwäschers in den nächsten 2 1/2 Stunden vorhersagen, wobei das Grundgesetz eingehalten wird, daß die maximal mögliche durch die Stoffaustauschfläche gegebene Abscheidung des $SO_2$ nur dann erreicht werden kann, wenn die Auflösereaktion größer oder gleich ist der zugeführten bzw. abgeschiedenen $SO_2$-Fracht. Diese Regelbedingung entspricht dem molaren Umsatz.

Beispiel

```
Wäschersuspension Volumen        1.500 m³

pH-Wert                          5,8

Carbonat-Gehalt (Suspension)     7 g/l

SO₂-Fracht (Abgas)               1,3 t/h

Erforderliche Auflösegeschwindigkeit 2,02 t CaCO₃/h


bzw. die Auflösegeschwindigkeit

im Wäscher            = gelöstes CaCO₃/h = 0,193/l/h/
                        CaCO₃  im Wäscher
```

Die Auflösegeschwindigkeit bzw. das gelöste $CaCO_3$ hängt vom pH-Wert ab, wobei bei saurem pH-Wert die Auflösereaktion beschleunigt abläuft.

Normiert man diese Auflösegeschwindigkeit auf den pH-Wert, so ergibt sich eine Auflösegeschwindigkeit im Wäscher = $1,136.10^3$/l/mol h/.

Die Auflösereaktion erfolgt als Funktion der H+-Ionenkonzentration = x mit dem Potenzfaktor 0,65. Setzt man der pH-Wert mit 3,5 in der Meßzelle ein, so ergibt sich eine Auflösegeschwindigkeit in der Meßzelle von 6,03/l/h bzw. 0,100/l/min.

Natürlich besitzt die Meßzelle eine andere geometrische Form und eine andere Auflösegeschwindigkeit als der Wäscher, welche durch eine Konstante korrigiert werden kann. Somit ergibt sich aus der Reaktivität (Auflösegeschwindigkeit), die aus der Messung in der Meßzelle gewonnen wurde, die Auflösegeschwindigkeit des Kalksteines im Wäscher $V_W = K . V_M$. Bei Versuchen zeigt sich, daß K etwa 1 ist.

Mit dieser Gleichung kann auch im Teillastbetrieb des Wäschers mit Hilfe der Messung überprüft werden, ob eine genügende Reaktivität vorliegt, um bei Vollast den Wäscher mit dem erforderlichen Abscheidegrad zu betreiben, bei ungenügender Reaktivität muß der erforderliche Überschuß angehoben werden, bei höherer Reaktivität kann Kalkstein eingespart werden.

Die Vorteile des erfindungsgemäßen Regelverfahrens liegen in der Wartungsarmut und Betriebssicherheit. Sie wirkt selbstkalibrierend und ergibt eine Verbesserung in der Abscheideleistung, wodurch der Karbonateinsatz verringert und gleichzeitig die Qualität des erzeugten Gipses verbessert wird, so daß die Weiterverwendung des Gipses in der Bausteinindustrie ermöglicht wird, wodurch Deponiegebühren eingespart werden können.

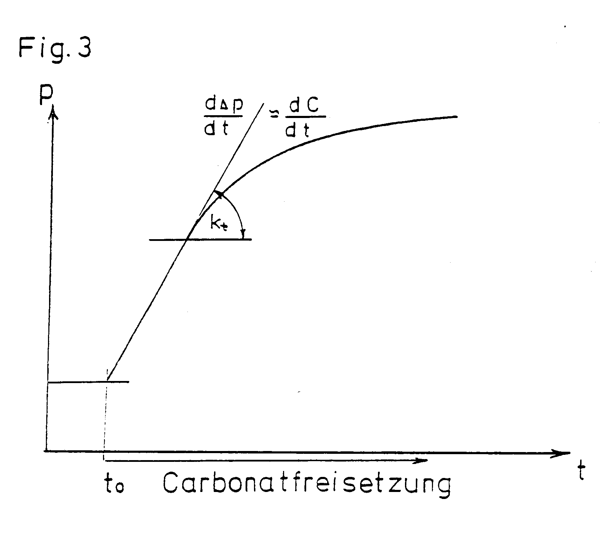

In Fig. 3 ist der Druckverlauf über der Zeit während der Messung dargestellt. Aus den Druckwerten wird der im Verlaufe der Messung in der Meßzelle befindliche ungelöste (Rest) Carbonatgehalt errechnet. Nach Logarithmieren dieses Wertes kann über die Zeit eine Regressionsgerade ermittelt werden, um die Auflösegeschwindigkeit des Kalksteines zum Zeitpunkt der Säurezugabe $t_0$ zu bestimmen. Dieser Wert gibt vereinfacht ausgedrückt an, wie oft sich das Carbonat der Suspension pro Zeit (h,min) auflöst.

Multipliziert man diesen Wert mit der Carbonatkonzentration, ergibt sich die aufgelöste Kalksteinmenge pro Zeiteinheit

$$\frac{dc}{dt} = K (C_W - C_M) \qquad C_W \quad \text{Carbonatgehalt Wäscher}$$

$$C_M \quad \text{Carbonat Meßzelle zur Zeit t}$$

$$C \quad \text{Integrationskonstante}$$

$$\text{Integration} \qquad K \quad \text{Reaktivität (l/t)}$$

$$C_W - C_M = C \times e^{-K_M . t}$$

Aus der $SO_2$-Fracht und der Reaktivität errechnet sich der pH-Wert im Wäscher bzw. Waschsuspension, wenn sich das System im Gleichgewicht befindet.

Aus der Carbonatmessung und der Reaktivität kann die aufgelöste Carbonatmenge berechnet werden. Da der Wirkungsgrad des Wäschers als Funktion des pH-Wertes bekannt ist, kann geprüft werden, ob der Kalksteingehalt der Waschsuspension ausreichend ist.

Im Wäscher werden nach Beispiel 7.0 g reaktives $CaCO_3$ pro l Waschflüssigkeit gelöst. Das ergibt eine Reaktivität im Wäscher ($K_W$) von 0,193, bei der 1,3 t $SO_2$ im Wäscher absorbiert werden sollen. Gemäß der Potenzfunktion des pH-Wertes (Ionenkonzentration) erhält man durch Umformen den benötigten pH-Wert mit 5,8. Man erkennt, daß der vorgesehene pH-Wert 3,5 auf der sicheren Seite, also ausreichend ist.

**Patentansprüche**

1. Verfahren zur Bestimmung der Reaktivität einer in einer nassen Rauchgasentschwefelungsanlage im Wäscher zirkulierenden, teilweise gebrauchten Kalksteinsuspension zur Regelung der Zugabe von frischem Kalksteinmehl zur Gewährleistung der $SO_2$-Absorptionsfähigkeit der Rauchgasentschwefelungsanlage bei Lastschwankungen, wobei der zirkulierenden Kalksteinsuspension jeweils eine konstante Teilmenge entnommen wird, dieser Säure zur Lösung des suspendierten Kalksteins zugemischt wird, die Auflösegeschwindigkeit des Kalksteinmehles in der Säurelösung bei pH 3,5 gemessen und zur Bestimmung der notwendigen Kalksteinzugabe zur Wäschersuspension verwendet wird.

2. Verfahren nach Anspruch 1, dadurch gekennzeichnet, daß als Säure Essigsäure verwendet wird.

3. Verfahren nach Anspruch 1, dadurch gekennzeichnet, daß das Volumen des bei der Lösung entstehenden Gases bei konstanter Zeit gemessen wird.

4

4. Verfahren nach Anspruch 1, dadurch gekennzeichnet, daß die Kalksteinsuspension kontinuierlich durch eine Zweigleitung geführt wird, diese zu Meßzwecken der Suspension vom Kreislauf abgetrennt wird, und die so aus dem Kreislauf abgeschnittene Teilmenge der Suspension der Spaltung durch Säure zugeführt und analysiert wird.

5. Verfahren nach Anspruch 1, dadurch gekennzeichnet, daß die Teilmenge der Suspension durch Säure aus der abgeschnittenen Zweigleitung ausgespült und dabei gleichzeitig diese von Suspensionsablagerungen gereinigt wird.

6. Verfahren nach Anspruch 1, dadurch gekennzeichnet, daß die Gasmenge aus dem Druckanstieg in einer gasdichten Meßzelle und der Temperatur in der Meßzelle unter Berücksichtigung der Volumensänderung durch die Säurezugabe ermittelt wird.

**Claims**

1. Process for determining the reactivity of a partly used suspension of limestone, circulating in a scrubber of a wet-type flue gas desulphurization plant for controlling the addition of new limestone powder in order to assure the $SO_2$ absorption capacity of the flue gas desulphurization plant in case of load variations where a constant partial quantity is taken from the circulating limestone slurry, mixed with an acid in order to dissolve the suspended limestone, the dissolution rate of the limestone powder in the acid solution is measured at a pH-value of 3.5 and used for determining the required amount of limestone to be added to the slurry circulating in the scrubber.

2. Process as described in claim 1 characterized by the fact that the acid used is ethanoic acid.

3. Process as described in claim 1 characterized by the fact that the volume of the gas produced during the dissolution is measured after a constant amount of time.

4. Process as described in claim 1 characterized by the fact that the limestone slurry is continually led in a branching pipe which is cut off the circuit in order to measure that slurry and where the partial amount of the slurry cut off the circuit that way is led to an acid decomposition phase and analyzed afterwards.

5. Process as described in claim 1 characterized by the fact that the partial amount of the slurry is washed out of the cut-off branch by an acid which at the same time cleans the branch from the slurry deposits.

6. Process as described in claim 1 characterized by the fact that the gas volume resulting from the increase in the pressure in a gas-tight measuring probe and the temperature in the measuring probe is determined where the changes in the volume resulting from the addition of an acid are considered as well.

**Revendications**

1. Procédé pour déterminer la réactivité d'une suspension de chaux partiellement utilisée, circulant dans un laveur d'une installation à désulfuration des fumées humides pour régler l'addition de poudre de chaux fraîche afin de garantir la capacité d'absorption d'anhydride de soufre (SO2) d'une installation à désulfuration en cas de variations de charge où une quantité partielle constante est prise de la suspension de chaux circulant, un acide est malaxé à la dernière pour assurer la dissolution de la chaux en suspension, la vitesse de dissolution de la poudre de chaux étant mesurée dans la solution à la valeur pH de 3,5 et utilisé pour déterminer la quantité d'additions de chaux nécessaire dans la suspension circulant dans le laveur.

2. Procédé selon la revendication 1, caractérisé par le fait que l'acide utilisé est l'acide acétique.

3. Procédé selon la revendication 1, caractérisé par le fait que le volume du gaz produit lors de la dissolution est mesuré après un intervalle de temps constant.

4. Procédé selon la revendication 1, caractérisé par le fait que la suspension de chaux est continuellement conduite dans une tuyauterie à branchements qui est séparé du circuit afin de mesurer la suspension et la quantité partielle de la suspension ainsi coupée du circuit est conduite à la décomposition à l'aide de l'acide et analysée.

5. Procédé selon la revendication 1, caractérisé par le fait que la quantité partielle de la suspension est éliminée de la tuyauterie à branchements coupée par un acide ce qui assure l'épuration des dépôts de la suspension de la dernière.

6. Procédé selon la revendication 1, caractérisé par le fait que le volume de gaz résultant de l'augmentation de la pression dans une cellule de mesure étanche aux gaz et de la température dans la cellule de mesure est déterminé par l'addition de l'acide considérant la variation du volume en même temps.

Fig. 1

Fig. 2

Fig. 3

$$\frac{d\Delta p}{dt} \; \widehat{=}\; \frac{dC}{dt}$$

$k_t$

$t_0$   Carbonatfreisetzung

$t$